# EUROPÄISCHE PATENTSCHRIFT

(11) **EP 0 951 573 B1**
(45) Veröffentlichungstag und Bekanntmachung des Hinweises auf die Patenterteilung: **19.12.2001**
(21) Anmeldenummer: 98943816.3
(22) Anmeldetag: 31.07.1998
(51) Int. Cl.: C22B 19/20, C25C 1/16, C25B 15/08, C01G 9/06

(54) **VERFAHREN ZUR GEWINNUNG VON NICHTEISENMETALLEN WIE ZINK MITTELS ELEKTROLYSE UNTER ZUGABE PHOSPHORHALTIGER STOFFE**
METHOD FOR EXTRACTING NON-FERROUS METALS SUCH AS ZINC BY ELECTROLYSIS AND BY ADDING SUBSTANCES CONTAINING PHOSPHOR
PROCEDE D'EXTRACTION DE METAUX NON FERREUX TELS QUE LE ZINC PAR ELECTROLYSE AVEC ADJONCTION DE MATIERES CONTENANT DU PHOSPHORE

(30) Priorität: 27.10.1997 DE 19747328
(43) Veröffentlichungstag der Anmeldung: 27.10.1999
(73) Patentinhaber: RUHR-ZINK GMBH, 45702 Datteln (DE)
(72) Erfinder: SMYKALLA, Günter, D-45728 Haltern (DE); MÜLLER, Fritz, D-45739 Oer-Erkenschwick (DE); NÜRNBERGER, Frank, D-59348 Lüdinghausen (DE)
(74) Vertreter: Lenzing, Andreas, Dr.
(86) Internationale Anmeldenummer: EP9804807
(87) Internationale Veröffentlichungsnummer: WO9922037

(56) Entgegenhaltungen:
- EP-A- 0 132 014
- EP-A- 0 134 053
- US-A- 4 789 445
- DATABASE WPI Section Ch, Week 8431 Derwent Publications Ltd., London, GB; Class A60, AN 84-194366 XP002088277 & SU 1 058 887 A (VARSHAVER E V) , 7. Dezember 1983

## Beschreibung

Die vorliegenden Erfindung betrifft ein Verfahren zur Gewinnung von Nichteisenmetallen in an sich bekannter Weise mittels Elektrolyse.

Bei Elektrolyseverfahren zur Metallgewinnung ist ein wesentlicher Aspekt der Wirtschaftlichkeit des Verfahrens dies sogenannte Stromausbeute. Die Stromausbeute hängt unter anderem von der Oberflächengestalt der gewonnenen metallischen Abscheidungen auf den Elektroden ab. Hierzu gibt es im Falle der Zinkgewinnung mittels Elektrolyse die Druckschrift "Cathod Zinc Morphology and Effects of Changed Conditions in Electrowinning Cells" von Adcock und Ault, International Symposium - World Zinc 1993, Hobart, 10. - 13. Oktober 1993. In dieser Druckschrift wird unter anderem der Einfluß von Additiven, die dem Elektrolyten zugegeben werden, untersucht. Als Additive werden Leim, Antimon, Strontiumcarbonat, Kobalt und sogar Lakritz untersucht. Die erreichten Stromausbeuren lagen maximal im Bereich von 94%.

Ein zweites Problem bei der elektrolytischen Metallgewinnung ist die Reinigung der Lösung nach der Laugung (Zn-Rohlauge) von Elektrolysegiften, bevor diese auf die Elektrolysezellen gegeben wird. Diese Reinigung erfolgt zum Beispiel bei der Zinkherstellung durch Zugabe von Zinkpulver, wodurch störende Elemente wie Kupfer, Kobalt, Nickel, Cadmium und Thallium ausgefällt und zementiert werden. Der Zinkstaubverbrauch während der Laugenreinigung ist ein wesentlicher Kostenfaktor bei der Zinkherstellung. Dieses Problem ist beispielsweise in den deutschen Offenlegungsschriften DE 2231595 und DE 3819020 Al sowie in dem Zeitschriftenartikel "Über die Wirkung grenzflächenaktiver Stoffe als Zusatz zur Zinkstaubzementation von Cadmium und Thallium" von W. Roever, Erzmetall (1958), Seite 586 - 592 behandelt.

Bei den bekannten Laugenreinigungsverfahren sind die zur Fällung von Elektrolysegiften benötigten Zinkstaubmengen noch immer relativ groß. Außerdem muß zur Fällung von bestimmten Elementen, wie z. B. Cadmium, die Gegenwart eines anderen Elements, beim Cadmium die Gegenwart von Kupfer, gegeben sein.

Es ist Aufgabe der vorliegenden Erfindung, bei an sich bekannten Elektrolyseverfahren die Fällung von Elektrolysegiften zu erleichtern und die Stromausbeute in der Elektrolyse zu verbessern.

Diese Aufgabe wird von einem Verfahren mit den Merkmalen des Anspruchs 1 gelöst.

Weil zusätzlich die Zugabe von phosphorhaltigen Stoffen vorgesehen ist, wird die Fällung von Elektrolysegiften in der Laugenreinigung verbessert. Hierdurch kann der Verbrauch von zuzugebendem Metallstaub in der Reinigungsstufe verringert werden. Außerdem wird die Morphologie der Metallabscheidungen im Elektrolysebad derart verbessert, daß die Stromausbeute steigt und außerdem die gewonnene Metallanhaftung an den Elektroden kompakter ist.

Vorzugsweise wird das erfindungsgemäße Verfahren bei der Gewinnung von Nichteisenmetallen mit folgenden Verfahrensschritten vorgesehen:
- Rösten der Rohstoffe zur Überführung der metallhaltigen Anteile in oxidischer Form (Röststufe) ;
- Lösen der Metalloxide in einer Saure (Laugenstufe) ;
- Laugenreinigung in einem Zementationsprozeß;
- Abscheiden des Ne-Metalls mittels Elektrolyse.

Bei diesem Verfahren zeigt sich der Vorteil der Zugabe von phosphorhaltigen Stoffen sowohl bei der Laugenreinigung als auch bei der Elektrolyse. Außerdem kann der phosphorhaltige Stoff je nach Material in verschiedenen Verfahrensstufen zugesetzt werden. Dabei ist besonders vorteilhaft, wenn die phosphorhaltigen Stoffe nach dem Rösten zugegeben werden. Die phosphorhaltigen Stoffe können insbesondere auch in oxidischer Form, beispielsweise als P₂O₅ in wäßriger Lösung bzw. als Phosphorsäure zugegeben werden. Dies erleichtert die Handhabung und Dosierung der phosphorhaltigen Stoffe.

Nach einer weiteren Ausbildung des erfindungsgemäßen Verfahrens können die phosphorhaltigen Stoffe als Phosphatierschlamm, der ein Abfallprodukt von verschiedenen Lackierverfahren darstellt, zugegeben werden. Der Phosphatierschlamm kann vor oder nach dem Rösten in das Verfahren gegeben werden.

Besonders gute Ergebnisse ergeben sich, wenn in dem vorliegenden Verfahren der Phosphorgehalt nach dem Rösten auf nicht weniger als 200 ppm eingestellt wird, vorzugsweise auf nicht weniger als 400 ppm. Es kann auch vorgesehen sein, den Phosphorgehalt in der Laugenstufe auf nicht weniger als 0,5 mg/l, vorzugsweise auf nicht weniger als 1 mg/l, einzustellen. Außerdem kann schließlich der Phosphorgehalt in der Elektrolyse eingestellt werden auf nicht weniger als 0,5 mg/l, vorzugsweise nicht weniger als 2 mg/l. Durch diese Mindestkonzentrationen wird ein vorteilhafter Verfahrensablauf erreicht. Die erfindungsgemäßen Vorteile im Verfahrensablauf stellen sich jedoch auch bei erheblich größeren Phosphorkonzentrationen ein.

Im folgenden wird die vorliegende Erfindung anhand von zwei Betriebsbeispielen und drei Figuren veranschaulicht. Das erste Betriebsbeispiel betrifft die Verringerung der einzusetzenden Zinkstaubmenge und der nötigen Zuschlagstoffe in der Laugenreinigungsstufe bei der Zinkherstellung. Das zweite Betriebsbeispiel betrifft die Verbesserung der Morphologie einer Zinkabscheidung im Elektrolysebad unter Anwendung des erfindungsgemäßen Verfahrens. Die verbesserte Morphologie ist in den drei Figuren dargestellt.

### Betriebsbeispiel 1

Bei diesem Betriebsbeispiel wird von dem typischen Eintrag der Laugenreinigungsstufe ausgegangen, der in etwa folgende Zusammensetzung aufweist:
140 g/l Zn, 5 mg/l Fe, 15 mg/l Co, 9 mg/l Ni, 334 mg/l Cd, 350 mg/l Cu, pH-Wert 5,2. Der Eintrag der Laugenreinigungsstufe ist phosphorfrei im Rahmen der Nachweisgrenze, die bei < 0,1 mg/l liegt.

Der ursprüngliche Cadmiumgehalt von 334 mg/l der Lauge wurde in einem Versuch ohne Phosphoreinsatz und in einem parallelen Versuch mit Phosphoreinsatz behandelt. Die Verringerung der Cadmium-Restgehalte erfolgte mit Zugabe von Zinkstaub. Dabei ergab sich nach 30 Minuten eine Restkonzentration Cadmium von 280 mg/l ohne Phosphoreinsatz sowie von 26 mg/l mit Phosphoreinsatz. Nach einer Verweilzeit von 60 Minuten betrug die Restkonzentration 1,7 mg/l pro Liter Cadmium ohne Phosphoreinsatz und 0,14 mg/l Cadmium mit Phosphoreinsatz. Der niedrige Cadmiumgehalt der Zn-Reinlauge ist erforderlich für die Abscheidung von SHG-Zink (Super High Grade) mit weniger als 3 ppm Cd. Die Phosphorkonzentration in diesem Versuch betrug 25 mg/l. Eine positive Auswirkung des zugegebenen Phosphoranteils stellt sich jedoch ab einer Konzentration von 0,5 mg/l ein.

### Bebriebsbeispiel 2

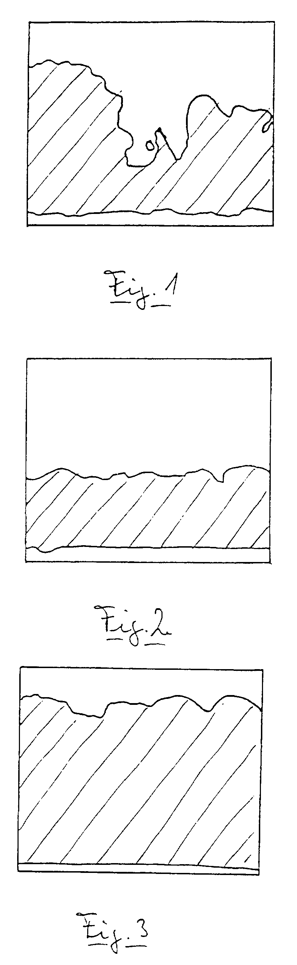

Bei diesem Betriebsbeispiel wurde die Stromausbeute bei der Zinkelektrolyse in Abhängigkeit von dem Phosphoreinsatz im Elektrolyten untersucht. Der spezifische Stromverbrauch lag ohne Phosphoreinsatz bei 2.980 kWh pro Tonne Zink. Mit Phosphoreinsatz wurde ein spezifischer Stromverbrauch von 2.710 kWh pro Tonne Zink ermittelt. Das entspricht einer Stromausbeute ohne Phosphoreinsatz von 93% und mit Phosphoreinsatz von 97%. Die Zinkabscheidung war nach 24 Stunden mit und ohne Phosphorzusatz im Mittel 1,75 mm dick. Bei der Zinkabscheidung ohne Phosphorzusatz wurde nur eine etwa 1 mm dicke, kompakte Zinkmetallschicht vorgefunden. Darauf baute sich eine Schicht, welche mit blättrigen oder knollenförmigen Kristallen überwachsen war. Die Abscheidung ist in Fig. 1 als metallographisches Schliffbild im Querschnitt dargestellt. Das Kristallwachstum auf der Oberfläche bewirkt ein Absinken der Stromausbeute und einen großen Austrag von Elektrolyt bei dem Ausheben der zinkbeladenen Elektroden aus dem Elektrolysebad. Aus diesem Grund muß die Elektrolyse nach 24 Stunden beendet werden.

Mit Phosphoreinsatz ist die Zinkabscheidung nach 24 Stunden kompakt und relativ glattflächig, so daß keine Verschlechterung der Stromausbeute beobachtet wird. Außerdem ist durch die relativ glattflächige Oberfläche der Austrag an Elektrolyt beim Ausheben der Elektroden nur gering. Die Abscheidung ist in Fig. 2 als Schliffbild dargestellt. Die Elektrolyse konnte weitere 24 Stunden betrieben werden, wodurch die Schichtdicke des abgeschiedenen Zinks auf 3,5 mm anwächst. Selbst nach 48 Stunden ist die abgeschiedene Metallschicht noch kompakt ohne nennenswertes Kristall- oder Knollenwachstum auf der Oberfläche, wie aus dem Schliffbild gem. Fig. 3 ersichtlich ist.

Der Phosphoreinsatz beim Betriebsbeispiel 2 in der Elektrolyse führt also neben einer verbesserten Stromausbeute zu einer verbesserten Zinkabscheidung, die nunmehr über mindestens 48 Stunden in der Elektrolyse erfolgen kann. Dadurch halbieren sich die Handhabungsvorgänge zum Entnehmen der Elektroden aus dem Elektrolysebad, Strippen des abgeschiedenen Zinks von der Elektrodenoberfläche und Wiedereinsetzen der Elektroden in das Bad. Die hierfür erforderlichen Maschinen- und Personalkosten sinken entsprechend. Außerdem ist die seltenere Unterbrechung des Elektrolysevorgangs vorteilhaft für die gesamte Nutzungsdauer der Elektrolysevorrichtung.

Das Betriebsbeispiel 2 wurde mit einem Phosphorgehalt von 2 mg/l im Vergleich zu einem unterhalb der Nachweisgrenze von 0,1 mg/l phosphorfreien Elektrolyten durchgeführt. Der positive Einfluß von Phosphor auf die elektrolytische Zinkabscheidung setzt etwa bei einer Konzentration von 0,5 mg/l ein. Hohe Phosphorkonzentrationen sind unschädlich.

In der Praxis kann der Phosphor auf verschiedene Weisen zugeführt werden. Zum einen kann bereits mit dem Zinksulfaterz ein phosphorhaltiger Rohstoff in die erste Roststufe gegeben werden. In der Röstung bleibt der Phosphor in der Feststoffphase und geht als Phosphoroxid in die Aufgabe zur Oxidlaugung. Diese Aufgabe zur Oxidlaugung kann auch mit phosphorhaltigen Wälzoxiden, z. B. aus der Entsorgung von Phosphatierschlamm, beschickt werden. Der Phosphatierschlamm kann hier auch je nach Schadstoffgehalt unmittelbar zu der Laugungsstufe gegeben werden. In der Laugenreinigung wird das Phosphat vorzugsweise als P₂O₅ in wäßriger Lösung zugegeben. Hier sind auch andere oxidische Formen von Phosphor als Zuschlagstoff denkbar. Die unmittelbare Zugabe von Phosphor zu dem Elektrolyten wird vorzugsweise ebenfalls als P₂O₅ in wäßriger Lösung erfolgen, da hier eine hohe Reinheit erforderlich ist.

Weiterhin können aufgrund der guten Zementationsergebnisse für Elektrolysegifte in der Laugenreinigungsstufe (Cadmium, Nickel, Kobalt, Kupferabscheidung) die in schwierigen Fällen bislang erforderlichen Zuschläge entfallen. In der Praxis wird in der Laugenreinigung As₂O₃ zugesetzt, was zum einen hinsichtlich der Weiterverarbeitung der Zementationsrückstände problematisch ist, zum anderen auch einen Kostenfaktor darstellt. Dieser Zuschlag kann bei Phosphorzugabe entweder entfallen oder durch vorteilhaftere Zuschläge substituiert werden.

## Patentansprüche

1. Verfahren zur Gewinnung von Zink aus metallhaltigen Rohstoffen mittels Elektrolyse mit folgenden Verfahrensschritten:
- Rösten der Rohstoffe zur Überführung der metallhaltigen Anteile in oxydischer Form (Röststufe);
- Lösen der Metalloxyde in einer Säure (Laugungsstufe);
- Einstellen des Phosphorgehaltes in der Laugenstufe auf mindestens 0,5 mg/l durch Phosphorzugabe;
- Laugenreinigung mittels Zinkpulverzementation;
- Abscheiden des Zinks mittels Elektrolyse.

2. Verfahren nach Anspruch 1, **dadurch gekennzeichnet , daß** die phosphorhaltigen Stoffe nach dem Rösten zugegeben werden.

3. Verfahren nach einem der vorhergehenden Ansprüche, **dadurch gekennzeichnet , daß** die phosphorhaltigen Stoffe in oxidischer Form zugegeben werden.

4. Verfahren nach einem der vorhergehenden Ansprüche, **dadurch gekennzeichnet , daß** die phosphorhaltigen Stoffe als P₂O₅, vorzugsweise in wässriger Lösung, zugegeben werden.

5. Verfahren nach einem der vorhergehenden Ansprüche, **dadurch gekennzeichnet , daß** die phosphorhaltigen Stoffe als Phosphatierschlamm den Rohstoffen oder dem Röstgut zugegeben werden.

6. Verfahren nach einem der vorhergehenden Ansprüche, **dadurch gekennzeichnet , daß** der Phosphorgehalt nach dem Rösten auf nicht weniger als 200 ppm eingestellt wird.

7. Verfahren nach einem der vorhergehenden Ansprüche, **dadurch gekennzeichnet , daß** der Phosphorgehalt nach dem Rösten auf nicht weniger als 400 ppm eingestellt wird.

8. Verfahren nach einem der vorhergehenden Ansprüche, **dadurch gekennzeichnet , daß** der Phosphorgehalt in der Laugungsstufe auf nicht weniger als 1 mg/l eingestellt wird.

9. Verfahren nach einem der vorhergehenden Ansprüche, **dadurch gekennzeichnet , daß** der Phosphorgehalt in der Elektrolyse auf nicht weniger als 0,5 mg/l eingestellt wird.

10. Verfahren nach einem der vorhergehenden Ansprüche, **dadurch gekennzeichnet , daß** der Phosphorgehalt in der Elektrolyse auf nicht weniger als 2 mg/l eingestellt wird.

## Claims

1. Method for extracting zinc from metal-containing raw material by electrolysis in the following steps
o Roasting of the raw material to convert the metal-containing components into oxidic form (roasting stage);
o Dissolving the metal oxides in an acid (leaching stage);
o Adjustment of the phosphorus content in the leaching stage to at least 0.5 mg/l by addition of phosphorus;
o Purification of the leach by zinc powder cementation;
o Extraction of the zinc by electrolysis.

2. Method according to claim 1, **characterised in that** the phosphorus containing substances are added after roasting.

3. Method according to one of the above claims, **characterised in that** the phosphorus containing substances are added in oxidic form.

4. Method according to one of the above claims, **characterised in that** the phosphorus containing substances are added as P₂O₅ preferably in aqueous solution.

5. Method according to one of the above claims, **characterised in that** the phosphorus containing substances are added as phosphating sludge to the raw material or the roasted material.

6. Method according to one of the above claims, **characterised in that** the phosphorus content is adjusted after roasting to not less than 200 ppm.

7. Method according to one of the above claims, **characterised in that** the phosphorus content is adjusted after roasting to not less than 400 ppm.

8. Method according to one of the above claims, **characterised in that** the phosphorus content is adjusted in the leaching stage to not less than 1 mg/l.

9. Method according to one of the above claims, **characterised in that** the phosphorus content is adjusted in the electrolysis to not less than 0.5 mg/l.

10. Method according to one of the above claims, **characterised in that** the phosphorus content is adjusted in the electrolysis to not less than 2 mg/l.

## Revendications

1. Procédé d'extraction de zinc à partir de matières premières contenant des métaux par électrolyse, par les étapes de procédé suivantes :
- grillage des matières premières pour amener les parties contenant des métaux à la forme oxydée (étape de grillage) ;
- dissolution des oxydes métalliques dans un acide (étape de lixiviation) ;
- ajustement de la teneur en phosphore dans l'étape de lixiviation à au moins 0,5 mg/l par addition de phosphore ;
- épuration par lixiviation par cémentation à la poudre de zinc ;
- séparation du zinc par électrolyse.

2. Procédé selon la revendication 1, **caractérisé en ce que** les matières contenant du phosphore sont ajoutées après le grillage.

3. Procédé selon l'une des revendications précédentes, **caractérisé en ce que** les matières contenant du phosphore sont ajoutées sous forme oxydée.

4. Procédé selon l'une des revendications précédentes, **caractérisé en ce que** les matières contenant du phosphore sont ajoutées sous forme de P₂O₅, de préférence en solution aqueuse.

5. Procédé selon l'une des revendications précédentes, **caractérisé en ce que** les matières contenant du phosphore sont ajoutées sous forme de suspension phosphatée aux matières premières ou au produit de grillage.

6. Procédé selon l'une des revendications précédentes, **caractérisé en ce que** la teneur en phosphore après le grillage est ajustée à pas moins de 200 ppm.

7. Procédé selon l'une des revendications précédentes, **caractérisé en ce que** la teneur en phosphore après le grillage est ajustée à pas moins de 400 ppm.

8. Procédé selon l'une des revendications précédentes, **caractérisé en ce que** la teneur en phosphore dans l'étape de lixiviation est ajustée à pas moins de 1mg/l.

9. Procédé selon l'une des revendications précédentes, **caractérisé en ce que** la teneur en phosphore dans l'électrolyse est ajustée à pas moins de 0,5 mg/l.

10. Procédé selon l'une des revendications précédentes, **caractérisé en ce que** la teneur en phosphore dans l'électrolyse est ajustée à pas moins de 2 mg/l.
